Europäisches Patentamt

European Patent Office

Office européen des brevets

(19)

(11) Veröffentlichungsnummer: **0 096 112**
**B1**

# (12) EUROPÄISCHE PATENTSCHRIFT

(45) Veröffentlichungstag der Patentschrift:
16.07.86

(21) Anmeldenummer: 82111054.1

(22) Anmeldetag: 30.11.82

(51) Int. Cl.⁴: **G 02 C 1/04**

(54) **Brille mit auswechselbaren Sichtscheiben.**

(30) Priorität: 08.06.82 DE 3221644

(43) Veröffentlichungstag der Anmeldung:
21.12.83 Patentblatt 83/51

(45) Bekanntmachung des Hinweises auf die Patenterteilung:
16.07.86 Patentblatt 86/29

(84) Benannte Vertragsstaaten:
AT CH DE FR GB IT LI

(56) Entgegenhaltungen:
DE - B - 1 175 458
FR - A - 1 090 623
US - A - 4 176 921

(73) Patentinhaber: OPTYL HOLDING GMBH & CO.
VERWALTUNGS-KG, Hans-Stiessberger-Strasse 2a,
D-8013 Haar bei München (DE)

(72) Erfinder: Dianitsch, Franz, Lerchenau 3, A-4020 Linz (AT)
Erfinder: Pschebezin, Anton, Negrellistrasse 2,
A-4053 Haid (AT)

ACTORUM AG

## Beschreibung

Die Erfindung bezieht sich auf eine Brille, insbesondere eine Sonnenschutz- und/oder Korrektionsbrille oder Sportbrille, deren Sichtscheiben durch solche anderer Tönung und/oder unterschiedlicher Optik austauschbar sind.

Bei einer aus der US-A-4 176 921 bekannten Brille dieser Art mit Volleinfassungen (d.h. mit ringsum eingefassten Sichtscheiben), weisen die Einfassungen an ihren Rändern seitlich und im unteren Bereich hakenförmig nach einwärts gebogene Auflagestifte auf, welche die von oben eingeschobenen Sichtscheiben in der Einfassung haltern. Ein Klapphebel, welcher an der die beiden Einfassungen verbindenden, oberen Brücke des Brillenrahmens angebracht ist und für jede Sichtscheibe je einen zusätzlichen Auflagestift trägt, sorgt dann beim Herunterklappen des Hebels dafür, dass die eingelegten Sichtscheiben nicht wieder nach oben herausrutschen können.

Die FR-A-1 090 623 beschreibt eine Brille, deren Sichtscheibeneinfassungen je in einen starren und einen biegsamen Fassungsteil unterteilt sind. An einem der Übergänge vom starren zum biegsamen Fassungsteil ist eine Klemmvorrichtung vorgesehen, welche zwecks Auswechseln der Sichtscheiben gelockert bzw. festgezogen werden kann.

Bei den neuerdings immer stärker verbreiteten Brillen mit Teileinfassungen (d.h. mit nur über einen Teil des Sichtscheibenrandes sich erstreckenden Einfassungen) sind die vorstehend angegebenen Wege nicht gangbar. Aus der DE-B-1 175 458 ist es bekannt, an jedem Ende einer Teileinfassung das Ende eines elastischen Fadens zu befestigen und in demjenigen Randgebiet der einzusetzenden Sichtscheibe, welche von der Teileinfassung nicht umfasst wird, eine Nut vorzusehen, in welche der elastische Faden eingelegt wird, dessen Länge so bemessen ist, dass er nach dem Einlegen in die Nut gespannt ist.

Jedoch treten hierbei in der Praxis erhebliche Schwierigkeiten auf, weil die Fadenlänge zwischen nur geringen Toleranzen schwanken darf. Bei zu kurzem Faden klemmt dieser zu fest in der Nut, was nicht nur den Sichtscheibenwechsel erschwert, sondern auch die Gefahr einer Beschädigung der Sichtscheibe bzw. der Sichtscheibennut mit sich bringt. Ist der Faden dagegen zu lang, so sitzt die Sichtscheibe nicht genügend fest in der Fassung und fällt leicht heraus. Bei einer grösseren Fadenelastizität ist zwar die Fadenlänge nicht ganz so kritisch, doch lässt sich dann die eingesetzte Sichtscheibe leicht aus der Fassung drücken, wenn die Brille einer nur geringen mechanischen Belastung unterliegt, wie dies beispielsweise beim Einlegen der Brille zwischen Wäschestücke in einem vollgepackten Koffer der Fall ist.

Der Erfindung liegt daher die Aufgabe zugrunde, eine Brille mit in Teileinfassungen ruhenden, auswechselbaren Sichtscheiben zu schaffen, bei welcher die oben erwähnten Schwierigkeiten nicht mehr auftreten und welche ein rasches und leichtes Auswechseln der Sichtscheiben gestattet sowie deren festen und sicheren Sitz in den Fassungen gewährleistet.

Diese Aufgabe wird gelöst durch eine Brille mit in Teileinfassungen ruhenden, auswechselbaren Sichtscheiben, bei denen die Sichtscheibenränder in denjenigen Gebieten, welche die Teileinfassungen nicht umgeben, von in Nuten ruhenden Fäden umspannt werden, die an den inneren oder äusseren Enden der beiden Teileinfassungen befestigt sind. Die erfindungsgemässe Brille kennzeichnet sich durch die Merkmale der Ansprüche 1 und 4.

Während also bei den bisherigen Brillen dieser Art das Spannen des Fadens bereits bei dessen Einlegen in die Randnut der Sichtscheibe somit zwangsläufig erfolgt und die dabei auftretende Spannungsstärke nicht willkürlich verändert werden kann, werden bei der erfindungsgemässen Brille die Sichtscheiben spannungslos eingesetzt und erst dann die Fäden verspannt, wobei die Spanneinrichtung vorzugsweise auch eine gewisise Variation der Fadenspannungsstärke zulässt. Auf diese Weise ist es nicht nur möglich, die Sichtscheiben mühelos auszuwechseln, sondern man kann auch Fehlbemessungen der Fadenlänge in gewissen Grenzen kompensieren.

Die erfindungsgemässe Brille sei nunmehr anhand zweier bevorzugter Ausführungsformen näher erläutert. Es ist jedoch klar, dass auch andere Ausführungsformen im Rahmen der Erfindung denkbar sind.

Fig. 1 zeigt eine Brille mit den Merkmalen der Erfindung in perspektivischer Darstellung;

Fig. 2 zeigt die Einzelteile der Spanneinrichtung von Fig. 1 in auseinandergenommener Form;

Fig. 3 verdeutlicht die Art der Anlenkung der Halteklammer einer Spanneinrichtung nach Fig. 1;

Fig. 4 gibt die Anordnung der eigentlichen Spannelemente der Einrichtung von Fig. 1 wieder;

Fig. 5 zeigt eine Brille mit einer modifizierten Ausführungsform einer Spanneinrichtung;

Fig. 6 lässt den Verlauf des Spannfadens bei der Ausführungsform von Fig. 6 erkennen;

Fig. 7 veranschaulicht die Befestigungsart des Fadens an einer Teileinfassung;

Fig. 8a und b zeigen eine Spannklammer und einen Arretierbügel, wie sie bei der Ausführungsform nach Fig. 5 zur Anwendung kommen;

Fig. 9 zeigt den Verlauf des Spannfadens im Brückenbereich des Brillenrahmens bei der Ausführungsform von Fig. 5;

Fig. 10 ist eine Schnittansicht mit Schnitt auf Linie A-A von Fig. 9; und

Fig. 11 zeigt eine zusätzliche drehbare Verriegelung für Spannklammer und Arretierbügel von Fig. 8a und b, die ein unbeabsichtigtes Öffnen der Spannklammer verhindert.

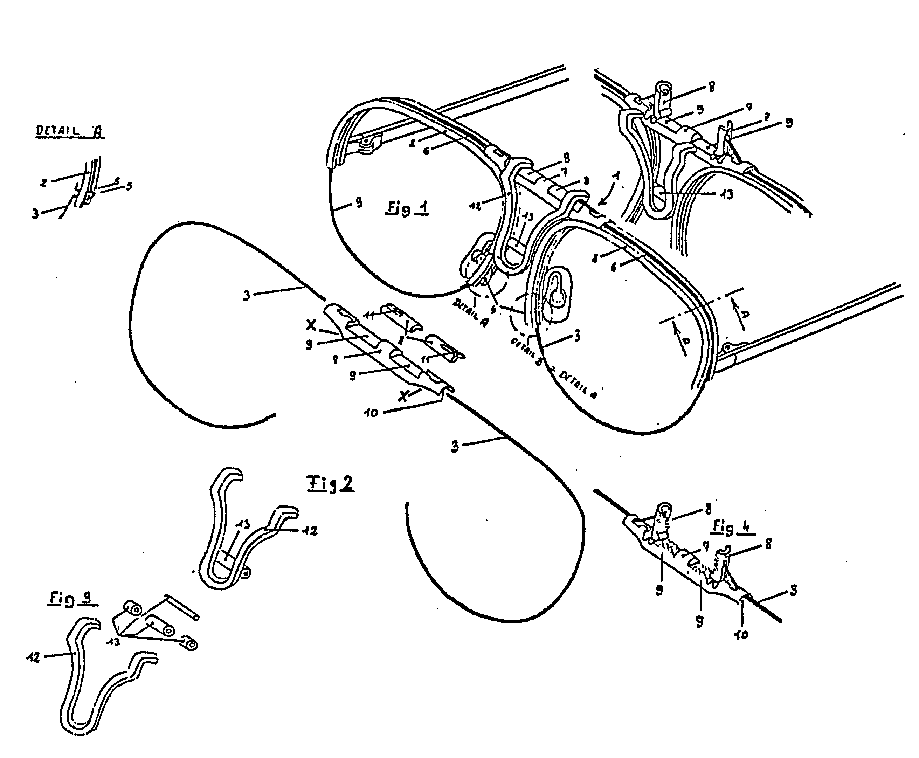

In Fig. 1 ist ein Brillenrahmen 1 mit Teileinfassungen 2 für die (nicht dargestellten) Sichtscheiben gezeigt, welcher die erfindungsgemässen Merkmale aufweist. An den im Brückenbereich befindlichen, inneren Enden der Teileinfassungen 2, ist bei 4 je das eine Ende eines Fadens 3 befestigt. Die Befestigung erfolgt im gezeigten Ausführungsbeispiel durch Einlegen und Durchziehen einer Fadenschlinge 4, durch zwei im Ende einer Teileinfassung 2 nebeneinander eingebohrte Löcher 5, in denen der Faden beim Strammziehen festgehalten wird. Der Faden kann aber auch beispielsweise durch Einklemmen des Fadenendes in einen am Ende einer Teileinfassung angebrachten Schlitz eingelegt werden, welcher dann durch eine in die Teileinfassung eingelassene Schraube zusammengepresst wird. Auch sind noch andere Befestigungsarten denkbar und dem Fachmann geläufig.

Der Faden besitzt eine gewisse Elastizität und besteht vorzugsweise aus monofilem, gestrecktem Nylon. Es sind aber auch Fäden anderer Struktur und aus anderen Materialien brauchbar.

Jeder der Fäden 3 verläuft, vom inneren Ende einer Teileinfassung aus, unten in einer Nut in der (nicht gezeigten) Sichtscheibe zum äusseren Ende der Teileinfassung und von dort aus in einer in der Teileinfassung vorgesehenen Rille 6.

Die Brücke 7, welche im oberen Teil des Brillenrahmens 1 die beiden Teileinfassungen 2 miteinander verbindet, ist als Fadenspanneinrichtung ausgebildet. Diese ist in Fig. 2 zur besseren Darstellung ihrer Einzelteile in auseinandergezogener Form gezeigt. Der Grundkörper der Brücke 7 ist bei x mit den beiden Teileinfassungen fest verbunden und bildet bei 10 einen Fadentunnel, welchen der Faden 3 in der Rille 6 bis zu einer Fläche 9 durchläuft, die als Auflagefläche für einen Fadenzuganker 8 dient. An diesem Fadenzuganker 8 ist das andere Ende des Fadens 3 befestigt, nachdem das Fadenende einen Fadengraben 11 im Anker 8 durchlaufen hat (Fig. 2 und 4).

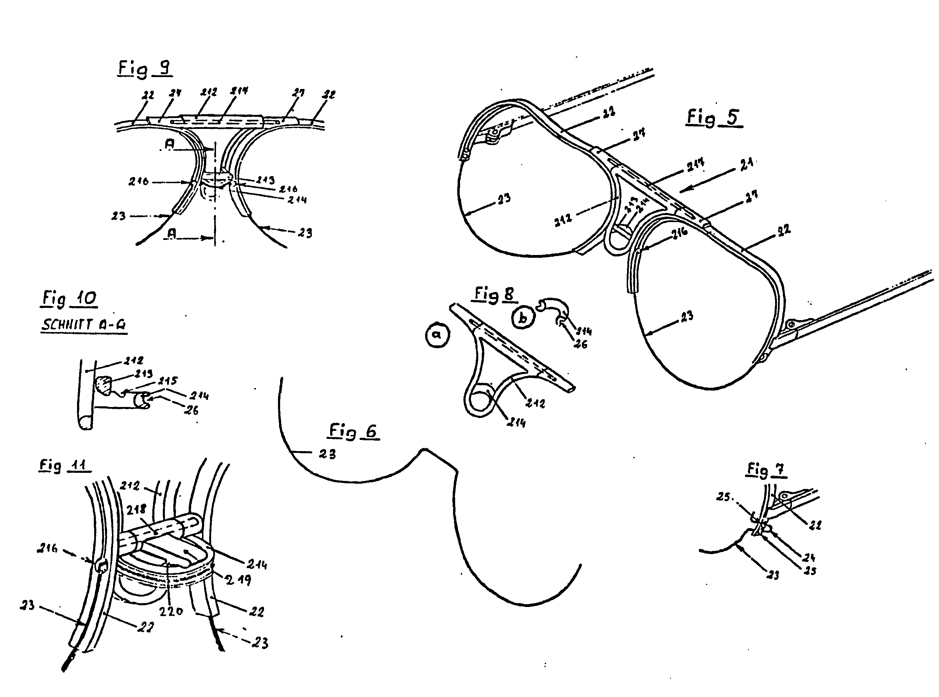

In waagrechter Lage ruht der Fadenzuganker 8 auf der Auflagefläche 9 und wird in dieser Lage durch eine Halteklammper 12 verriegelt (Fig. 1), welche um einen zwischen den Teileinfassungen 2 unterhalb der Brücke 7 angeordneten Steg 13 schwenkbar angelenkt ist. Der Aufbau dieser Anlenkung ist aus Fig. 3 ersichtlich.

Zum Einlegen der Sichtscheiben in die Teileinfassungen 2 des Brillenrahmens 1 wird die Halteklammer 12 heruntergeklappt, wodurch die Fadenzuganker 8 entriegelt werden. Durch Aufrechtstellen der Fadenzuganker 8 (Fig. 4) lockern sich die Fäden 3 so weit, dass die Sichtscheiben in die Teileinfassungen 2 eingesetzt und die Fäden 3 in die Randnuten der Sichtscheiben eingelegt werden können. Danach werden die Fadenzuganker 8 wieder waagrecht auf ihre Auflageflächen 9 gelegt, wodurch sich die Fäden spannen und die Sichtscheiben in ihren Einfassungen halten. Durch Hochklappen der Halteklammer 12 werden die Fadenzuganker 8 schliesslich in ihrer waagrechten Stellung gehalten.

Vorzugsweise sind die Auflagefläche 9 und untere Fläche des Fadenzugankers verzahnt (Fig. 4), so dass ein Fadenanker in vom Mittelpunkt der Brücke 7 unterschiedlich weit entfernten Stellungen einrasten kann. Auf diese Weise ist die Stärke der Fadenspannung variierbar und lässt sich an die Elastizitätseigenschaften des Fadens anpassen.

In den Fig. 5 bis 11 ist eine weitere Ausführungsform der erfindungsgemässen Brille dargestellt. Hier sind die im Brückenbereich zusammentreffenden Fäden miteinander verbunden und bilden einen einzigen durchgehenden Faden 23 (Fig. 6) für beide Teileinfassungen 22 des Brillenrahmens 21. Am äusseren (dem Brückenbereich entfernten) Ende der ersten Teileinfassung ist bei 24 das eine Ende des Fadens durch zwei Löcher 25 geschlungen und festgezogen (Fig. 7). Dann verläuft der Faden unterhalb der ersten Teileinfassung zum Brückenbereich, durch ein Loch 216 in dieser Teileinfassung und ein Loch 216 in der zweiten Teileinfassung und unterhalb derselben zu deren äusserem Ende, wo das andere Fadenende befestigt ist (Fig. 5 und 9). Die Brücke 27, welche im oberen Teil des Brillenrahmens 21 die beiden Teileinfassungen 22 miteinander verbindet, weist eine Achse 217 auf, um welche herum eine Spannklammer 212 drehbar angeordnet ist. Wie aus Fig. 8a ersichtlich, trägt die Spannklammer 212 in der Nähe ihres unteren Endes einen Arretierbügel 214, welcher hinter einem Steg 213 einhakt, der unterhalb der Brücke 27 eine Verbindung zwischen beiden Teileinfassungen 22 bildet (Fig. 5 und 9). Der Arretierbügel 214 weist eine Rille 26 (Fig. 8b) auf und ist auf der Spannklammer 212 so angeordnet, dass in seinem eingehakten Zustand die Rille mit den Löchern 216 fluchtet, der durch die Löcher 216 hindurchgehende Faden 23 sich automatisch in die Rille 26 einlegt und bei eingesetzten Sichtscheiben gespannt wird.

Auch bei dieser Ausführungsform lässt sich die Stärke der Fadenspannung variieren, wenn der Arretierbügel 214 an seiner Angriffsstelle am Steg 213 mit Rastrinnen 215 (Fig. 10) versehen ist.

In Fig. 11 ist eine zusätzliche Verriegelung der Spannklammer/Arretierbügel-Anordnung 212/214 gezeigt. Hier bildet der Steg 213 eine Achse 218, um welche herum ein Verriegelungshebel 219 mit Ansatz 220 angeordnet ist. Diese drehbare Verriegelung erlaubt es, die Spannklammer 212 gegen unbeabsichtigtes Öffnen durch Einschwenken in den Arretierbügel 214 zu sichern.

**Patentansprüche**

1. Brille mit in Teileinfassungen ruhenden, auswechselbaren Sichtscheiben, bei denen die Sichtscheibenränder in denjenigen Gebieten, welche die Teileinfassungen nicht umgeben, von in Nuten ruhenden Fäden umspannt werden, wobei jeder Faden (3) am inneren Ende (4) seiner Teileinfassung (2) befestigt ist, dadurch gekennzeichnet, dass jeder Faden (3), ausgehend vom genannten inneren Ende (4), nach Durchlaufen der Sichtscheibennut am äusseren Ende seiner Teileinfassung (2) in eine Rille (6) eintritt und von dieser über die Teileinfassung der Brücke (7) zugeführt wird, wobei die Brücke (7) als Fadenzuganker (8) tragende Fadenspanneinrichtung ausgebildet ist.

2. Brille nach Anspruch 1, dadurch gekennzeichnet, dass jeder Fadenzuganker (8) auf einer in der Brücke (7) dafür vorgesehenen Auflagefläche (9) ruht, wobei die Fadenzuganker (8) auf ihrer Auflagefläche (9) durch eine Halteklammer (12) verriegelbar sind, welche um einen zwischen den Teileinfassungen (2) unterhalb der Brücke (7) angeordneten Steg (13) schwenkbar angelenkt ist.

3. Brille nach Anspruch 1 und 2, dadurch gekennzeichnet, dass die Auflagefläche (9) und die aufliegende Fläche des Fadenzugankers (8) miteinander verzahnt sind.

4. Brille mit in Teileinfassungen ruhenden, auswechselbaren Sichtscheiben, bei denen die Sichtscheibenränder in denjenigen Gebieten, welche die Teileinfassungen nicht umgeben, von in Nuten ruhenden Fäden umspannt werden, die an den äusseren Enden der beiden Teileinfassungen befestigt sind, dadurch gekennzeichnet, dass die im Brückenbereich zusammentreffenden Fäden miteinander verbunden sind und einen einzigen, durchgehenden Faden (23) für beide Teileinfassungen (22) bilden, wobei der Faden am äusseren Ende der ersten Teileinfassung befestigt und von dieser ausgehend nach Durchlaufen der Nut der ersten Sichtscheibe, eines Loches (216) im inneren Ende der ersten Teileinfassung, eines Loches (216) im inneren Ende der zweiten Teileinfassung und der Nut der zweiten Sichtscheibe, schliesslich am äusseren Ende der zweiten Teileinfassung befestigt ist, und dass der Faden (23) auf seinem Weg zwischen den Löchern (216) in der ersten und der zweiten Teileinfassung (22) mittels einer Spannklammer (212) spannbar ist.

5. Brille nach Anspruch 4, dadurch gekennzeichnet, dass die Spannklammer (212) um eine Achse (217) der Brücke (27) herum drehbar ist und in der Nähe ihres unteren Endes einen Arretierbügel (214) trägt, welcher hinter einem unterhalb der Brücke (27) befindlichen Steg (213) einhakt, wobei der Arretierbügel (214) eine Rille (26) aufweist, in welcher der Faden (23) im Bereich zwischen den Löchern (216) bei eingehakter Spannklammer (212) ruht.

6. Brille nach Anspruch 4 und 5, dadurch gekennzeichnet, dass der Arretierbügel (214) an seiner Berührungsstelle mit dem Steg (213) mit Raststellen (215) ausgestattet ist.

7. Brille nach einem der vorhergehenden Ansprüche 1 bis 6, dadurch gekennzeichnet, dass die Fäden (3, 23) aus monofilem, gestreckten Nylon bestehen.

8. Brille nach einem der Ansprüche 4 bis 7, dadurch gekennzeichnet, dass der Steg (213) eine Achse (218) bildet, um welche herum ein Verriegelungshebel (219) mit Ansatz (220) in der Weise drehbar gelagert ist, dass der Ansatz (220) in Verriegelungsstellung im Arretierbügel (214) angreift.

## Claims

1. A pair of spectacles having interchangeable lenses mounted in partial mounts, the edges of the lenses being enclosed by threads engaging in grooves in those areas which are not surrounded by the partial mounts, each thread (3) being secured at the inner end (4) of its partial mount (2), characterised in that starting from the said inner end (4), each thread (3) enters a channel (6) after passing through the lens groove at the outer end of its partial mount (2) and is guided by the channel over the partial mount to the bridge (7), the latter being constructed as a thread tensioning device carrying thread tie rods (8).

2. Spectacles according to claim 1, characterised in that each thread tie rod (8) rests on a support surface (9) provided for the purpose in the bridge (7), the thread tie rods (8) being lockable on their support surface (9) by a retaining clip (12) mounted to pivot about a web (13) disposed beneath the partial mounts (2) beneath the bridge (7).

3. Spectacles according to claims 1 and 2, characterised in that the support surface (9) and the surface of the thread tie rod (8) resting thereon are toothed together.

4. Spectacles having interchangeable lenses mounted in partial mounts, the edges of the lenses being enclosed by threads engaging in grooves in those areas which are not surrounded by the partial mounts, the said threads being secured to the outer ends of the two partial mounts, characterised in that the threads meeting in the bridge area are interconnected and form a single continuous thread (23) for the two partial mounts (22), the thread being secured at the outer end of the first partial mount and, starting from the latter, is finally secured to the outer end of the second partial mount after passing through the groove in the first lens, a hole (216) in the inner end of the first partial mount, a hole (216) in the inner end of the second partial mount, and the groove of the second lens, and the thread (23) is adapted to be tensionable by means of a tensioning clip (212) on its path between the holes (216) in the first and second partial mounts (22).

5. Spectacles according to claim 4, characterised in that the tensioning clip (212) is adapted to rotate about a pivot (217) of the bridge (27) and bears a locking yoke (214) near its bottom end, said yoke engaging behind a web (213) situated beneath the bridge (27), said yoke (214) having a channel (26) in which the thread (23) rests in the area between the holes (216) when the tensioning clip (212) is engaged.

6. Spectacles according to claims 4 and 5, characterised in that the locking yoke (214) is provided with detent zones (215) at its place of contact with the web (213).

7. Spectacles according to any one of claims 1 to 6, characterised in that the threads (3, 23) consist of monofil stretched nylon.

8. Spectacles according to any one of claims 4 to 7, characterised in that the web (213) forms a pivot (218) around which a locking lever (219) having a projection (220) is so mounted for rotation that the projection (220) engages the locking yoke (214) when in the loking position.

## Revendications

1. Lunettes à verres amovibles, reposant dans des éléments de monture, dans lesquelles les bords de verres sont bridés tout autour, là où les éléments de monture ne les entourent pas, par des fils qui reposent dans des gorges, étant précisé que chaque fil (3) est fixé à l'extrémité intérieure (4) de son élément de monture (2), caractérisées en ce que chaque fil (3), en partant de l'extrémité intérieure mentionnée (4), après avoir parcouru la gorge du verre, pénètre, à l'extrémité extérieure de son élément de monture (2), dans une rainure (6) et qu'il est amené, par cette rainure, le long de l'élément de monture, au pontet (7), étant précisé que le pontet (7) est conçu comme dispositif de mise sous tension du fil, portant un tirant pour le fil (8).

2. Lunettes selon la revendication 1, caractérisées en ce que chaque tirant (8) pour le fil repose sur une surface d'appui (9), prévue dans ce but dans le pontet (7), étant précisé que les tirants (8) pour le fil peuvent être verrouillés sur leur surface d'appui (9) par un crampon (12) qui peut pivoter autour d'une barrette (13) disposée entre les éléments de monture (9), sous le pontet (7).

3. Lunettes selon les revendications 1 et 2, caractérisées en ce que la surface d'appui (9) et la surface par laquelle porte le tirant (8) présentent des dents qui engrènent les unes avec les autres.

4. Lunettes à verres amovibles, reposant dans des éléments de monture, dans lesquelles les bords des verres sont bridés tout autour, là où les éléments de monture ne les entourent pas, par des fils qui reposent dans des gorges, et qui sont fixés aux extrémités extérieures des deux éléments de monture, caractérisées en ce que les fils qui se recontrent dans la zone du pontet sont réunis ensemble et forment un fil unique traversant (23) pour les deux éléments de monture (22), étant précisé que le fil est fixé à l'extrémité extérieure du premier élément de monture et, partant de là, après avoir parcouru la gorge du premier verre, être passé dans un trou (216) à l'extrémité intérieure du premier élément de monture, dans un trou (216) à l'extrémité intérieure du deuxième élément de monture et, après avoir parcouru la gorge du deuxième verre, est finalement fixé à l'extrémité extérieure du deuxième élément de monture; et en ce que l'on peut tendre le fil (23), au moyen d'un tendeur (212), sur son trajet entre les trous (216), dans le premier élément de monture et dans le second élément de monture (22).

5. Lunettes selon la revendication 4, caractérisées en ce que le tendeur (212) peut tourner autour d'un axe (217) du pontet (27) et porte, au voisinage de son extrémité inférieure, un étrier de blocage (214) qui s'accroche derrière une barrette (213) qui se trouve sous le pontet (27), étant précisé que l'étrier de blocage (214) présente une rainure (26) dans laquelle repose le fil (23) dans la zone située entre les trous (216), lorsque le tendeur (212) est accroché.

6. Lunettes selon les revendications 4 et 5, caractérisées en ce que l'étrier de blocage (214) est muni de positions de crantage (215), à l'endroit de son contact avec la barrette (213).

7. Lunettes selon l'une des revendications précédentes 1 à 6, caractérisées en ce que les fils (3, 23) sont en nylon monofilament tendu.

8. Lunettes selon les revendications 4 à 7, caractérisées en ce que la barrette (213) forme un axe (218) autour duquel un levier de verrouillage (219) avec un bec (220) peut tourillonner de façon que le bec (220) vienne, en position de verrouillage, en prise avec l'étrier de blocage (214).

Fig 1

Fig 2

Fig 3

Fig 4

DETAIL A

DETAIL B

Fig 9

Fig 5

Fig 10
SCHNITT A-A

Fig 8

Fig 6

Fig 11

Fig 7

0 096 112